# EUROPEAN PATENT SPECIFICATION

(11) **EP 3 432 223 B1**
(45) Date of publication and mention of the grant of the patent: **21.10.2020**
(21) Application number: 17766149.3
(22) Date of filing: 09.02.2017
(51) Int. Cl.: G06K 19/077

(54) **ELECTRONIC APPARATUS AND WIRELESS COMMUNICATION SYSTEM**
ELEKTRONISCHE VORRICHTUNG UND DRAHTLOSKOMMUNIKATIONSSYSTEM
APPAREIL ÉLECTRONIQUE ET SYSTÈME DE COMMUNICATION SANS FIL

(30) Priority: 15.03.2016 JP 2016051577
(43) Date of publication of application: 23.01.2019
(73) Proprietor: Omron Corporation, Kyoto-shi, Kyoto 600-8530 (JP)
(72) Inventor: HAYAKAWA, Masayuki, Kyoto-shi Kyoto 600-8530 (JP); TANAKA, Seiji, Kyoto-shi Kyoto 600-8530 (JP)
(74) Representative: Becker & Kurig Partnerschaft Patentanwälte PartmbB
(86) International application number: PCT/JP2017/004778
(87) International publication number: WO 2017/159141

(56) References cited:
- JP-A- 2006 005 633
- JP-A- 2009 155 092
- JP-A- 2013 052 556
- JP-A- 2017 064 316
- US-A1- 2005 280 511
- US-A1- 2013 057 911

## Description

### [Technical Field]

The present invention relates to an electronic apparatus and a wireless communication system.

### [Background Art]

Patent Literature 1 discloses a configuration in which an RFID module including a wired communication port is provided in an electronic apparatus and the wired communication port of the RFID module is connected to a control circuit of the electronic apparatus. According to such a configuration, a setting value of the electronic apparatus can be used for controlling the electronic apparatus by previously storing the setting value in a storage circuit of the RFID module.

### [Citation List]

### [Patent Literature]

[Patent Literature 1]
   Japanese Unexamined Patent Application Publication No. 2006-5633 (published on January 5, 2006)
[Patent Literature 2]
   Japanese Unexamined Patent Application Publication No. 2009-155092 (published on July 16, 2009)
   US 2013/057911 A1 discloses an image forming apparatus including a storage unit that is accessible from an external device even if the image forming apparatus is in a power off state, a setting unit configured that sets information on an installation status of the image forming apparatus, and a control unit that, according to the information on the installation status set by the setting unit, enables writing, in the storage unit, of information corresponding to the information on the installation status from information used by the image forming apparatus at a plurality of timing points.

### [Summary of Invention]

### [Technical Problem]

In an electronic apparatus including a wireless communication module with a wired communication port with such a configuration, there is an advantage regarding the ease of wireless writing of a setting value of an electronic apparatus to the wireless communication module, but countermeasures to prevent an erroneous operation of the electric apparatus due to a setting value which is not appropriate are required.

An object of the present invention is to prevent an erroneous operation of an electronic apparatus including a wireless communication module with a wired communication port.

### [Solution to Problem]

The present invention is provided by appended claim 1. The following disclosure serves a better understanding of the present invention. An electronic apparatus according to the present invention is an electronic apparatus which includes a wireless communication module having a wired communication port. The electronic apparatus includes: a storage element which is provided separately from the wireless communication module and is not capable of wireless access; and a processing unit connected to the wireless communication module via the wired communication port and configured to transmit setting information of the electronic apparatus stored in the wireless communication module to the storage element. The wireless communication module includes a memory which is configured such that the setting information is wirelessly written therein from an outside of the electronic apparatus. The setting information includes identification information. The processing unit is configured to collate the identification information with predetermined data of the storage element and to transmit the setting information to the storage element when it is determined that the identification information is appropriate.

### [Advantageous Effects of Invention]

An erroneous operation of an electronic apparatus including a wireless communication module with a wired communication port can be prevented.

### [Brief Description of Drawings]

Fig. 1 is a block diagram showing a wireless communication system according to Example 1.
Fig. 2 is a block diagram for describing a setting operation of the wireless communication system according to Example 1.
Fig. 3 is a flowchart for describing a setting operation in Example 1.
Fig. 4 is an explanatory diagram for describing an input process of the setting operation in Example 1.
Fig. 5 is a flowchart for describing a resetting (setting update) operation in Example 1.
Fig. 6 is a flowchart for describing an input process of the resetting operation in Example 1.
Fig. 7 is an explanatory diagram for describing the resetting (setting update) operation in Example 1.
Fig. 8 is a block diagram for describing a state in which a thermostat is started up in Embodiment 1.
Fig. 9 is a flowchart for describing a startup process of the thermostat in Embodiment 1.
Fig. 10 is a block diagram for describing a state in which the thermostat is operated in Embodiment 1.
Fig. 11 is a block diagram for describing a state of the thermostat at the time of malfunction/security in Embodiment 1.
Fig. 12 is a flowchart for describing a setting operation of a wireless communication system according to Example 2.
Fig. 13 is a flowchart for describing a setting operation of a wireless communication system according to Example 3.
Fig. 14 is an explanatory diagram for describing an input process of a setting operation in Example 3.
Fig. 15 is a block diagram showing a thermostat according to Example 4.
Fig. 16 is a flowchart for describing an operation of the thermostat according to Example 4.
Fig. 17 is a block diagram for describing a state in which the thermostat is operated (switch OFF) in Example 4.
Fig. 18 is a block diagram for describing a state in which the thermostat is operated (switch ON) in Example 4.
Fig. 19 is a block diagram showing another configuration of the thermostat in Example 4.

### [Description]

An electronic apparatus is a thermostat as one example in the following description, but the electronic apparatus may also be a factory automation (FA) apparatus such as a timer, a counter, a sensor, or a controller, a medical apparatus, or the like and is not particularly limited. Furthermore, although examples of wireless communication include a radio frequency identification (RFID) system, the wireless communication may be a system using infrared communication and is not particularly limited.

### Example 1 is an example useful for understanding the invention

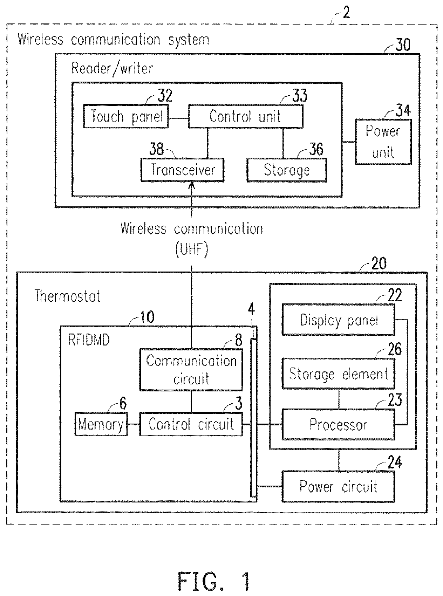

As shown in Fig. 1, a wireless communication system 2 according to Example 1 includes a thermostat 20 in which an RFID module (also known as RFIDMD or MD) 10 is built and a reader/writer 30.

The reader/writer 30 includes a touch panel 32, a transceiver 38, a storage 36, a control unit 33, and a power unit 34.

The thermostat 20 includes a display panel 22, a storage element 26, a processor 23, a power circuit 24, and the RFID module 10 which includes a communication circuit 8, a memory 6 (for example, an FRAM (registered trademark)), a control circuit 3, and a wired communication port 4. In addition, wireless communication (for example, in a UHF band) is performed between an antenna included in the communication circuit 8 and an antenna included in the transceiver 38 of the reader/writer 30. In other words, the reader/writer 30 can perform wireless writing to the memory 6 of the RFID module 10 and perform wireless reading from the memory 6.

The control circuit 3 of the RFID module 10 is connected to the processor 23 and the power circuit 24 via the wired communication port 4 and the processor 23 can perform wired writing to the memory 6 of the RFID module 10 and perform wired reading from the memory 6. The power circuit 24 supplies electric power to the display panel 22, the processor 23, the storage element 26, and the RFID module 10. Note that, when the power circuit 24 is off, the RFID module 10 is in a passive type and electric power generated by the communication circuit 8 during wireless communication with the reader/writer 30 is used in the control circuit 3 and the memory 6.

The thermostat 20 is shipped to a user (for example, an agency) after a type TA20 of the thermostat 20 is wirelessly written to the memory 6 of the RFID module 10 and predetermined data (which will be described below) is stored in the storage element 26.

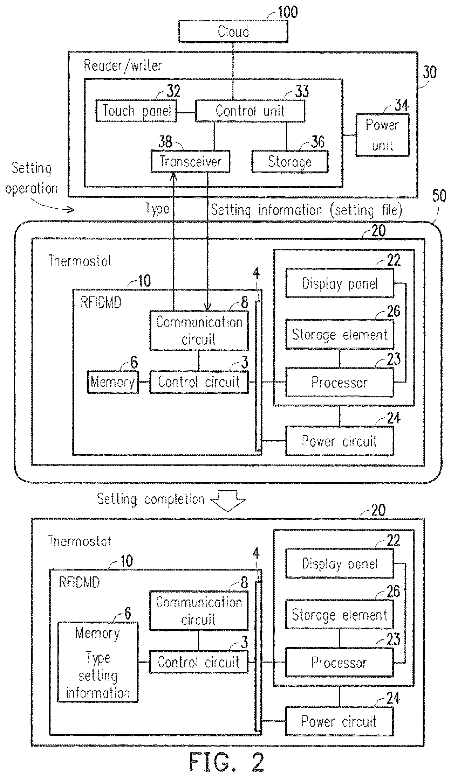

In Example 1, as shown in Figs. 2 to 4, a setting operation (writing of setting information to the RFID module 10) of the thermostat 20 is performed. Such a setting operation (also referred to as a "dispatch operation") is generally performed in, for example, an agency serving as the user in a state in which a thermostat 20 is put in a packing box 50.

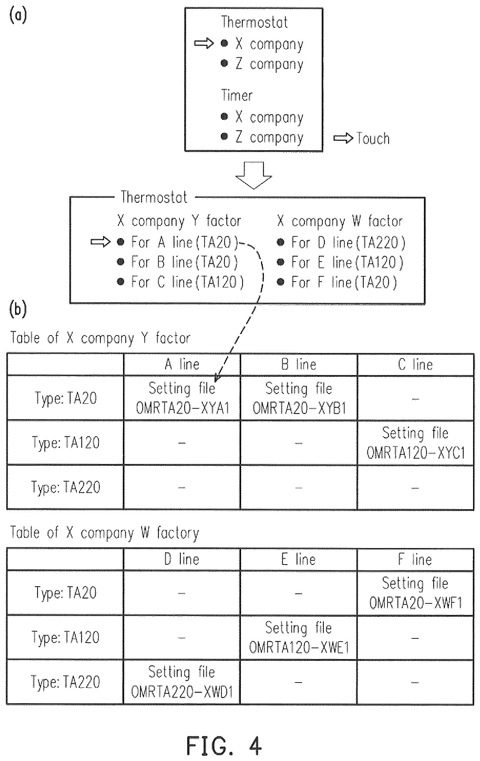

First, the user instructs writing of setting information to the thermostat (type: TA20) for X company Y factory A line through an input to the touch panel 32 of the reader/writer 30 (Step S1). In Step S1, as shown in (a) of Fig. 4, the user selects "X company" in a thermostat column in a touch manner and then selects "for A line (TA20)" of an X company Y factory column in a touch manner.

The control unit 33 of the reader/writer 30 receives an instruction from the user in Step S1 and wirelessly transmits an information provision request signal from the transceiver 38 to the RFID module 10 (built in the thermostat 20 in the packing box 50) (Step S2).

In the RFID module 10, the control circuit 3 receives the information provision request signal in Step S2 via the communication circuit 8 and wirelessly transmits the type (TA20) of the thermostat 20 written to the memory 6 from the communication circuit 8 to the reader/writer 30 (Step S3).

In the reader/writer 30, the control unit 33 receiving the type (TA 20) in Step S3 from the transceiver 38 collates the type (TA20) wirelessly transmitted from the RFID module 10 with a type (TA20) input by the user in cooperation with the storage 36 (Step S4).

If a collation result in Step S5 (collation OK?) is NO (the types do not match with each other), the control unit 33 displays a collation error in the touch panel 32 (Step S6). On the other hand, if a collation result in Step S5 (collation OK?) is YES (the types match with each other), the control unit 33 selects setting information (setting file OMRTA20-XYA1) corresponding to a combination of X company Y factory A line and the type (TA20) from a table illustrated in (b) of Fig. 4 stored in the storage 36, wirelessly transmits the setting information (setting file OMRTA20-XYA1) from the transceiver 38 to the RFID module 10, and requests writing of the setting information to the memory 6 (Step S7).

A setting file includes various setting values such as a target value corresponding to a destination or a type of sensor to be used. Furthermore, a name of the setting file includes type information (TA20), destination formation (specification information), and version information (XYA1) of the thermostat 20. As described below, "OMRTA20" of the first part is identification information and serves as a password when the thermostat is started up.

In the RFID module 10, the control circuit 3 receives a write request of setting information (setting file OMRTA20-XYA1) in Step S7 via the communication circuit 8 and writes the setting information (setting file OMRTA20-XYA1) to the memory 6 (Step S8). The control circuit 3 wirelessly transmits a write completion signal from the communication circuit 8 to the reader/writer 30 after the writing is completed (Step S9).

In the reader/writer 30, the control unit 33 receiving the write completion signal in Step S9 from the transceiver 38 displays information indicating that the writing of the setting information has been completed normally in the touch panel 32 (Step S10). Thus, the user recognizes that the setting operation (dispatch operation) has been performed properly.

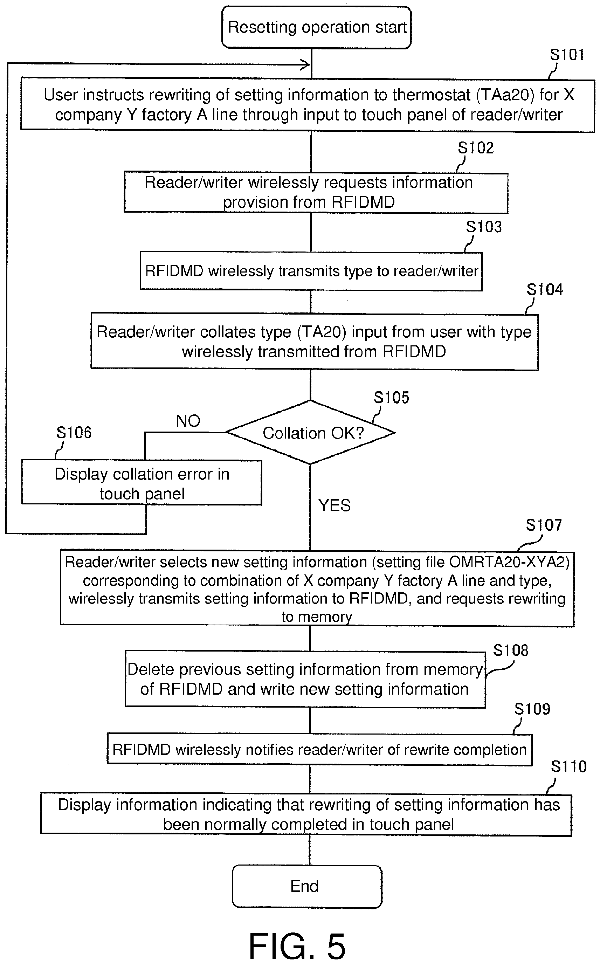

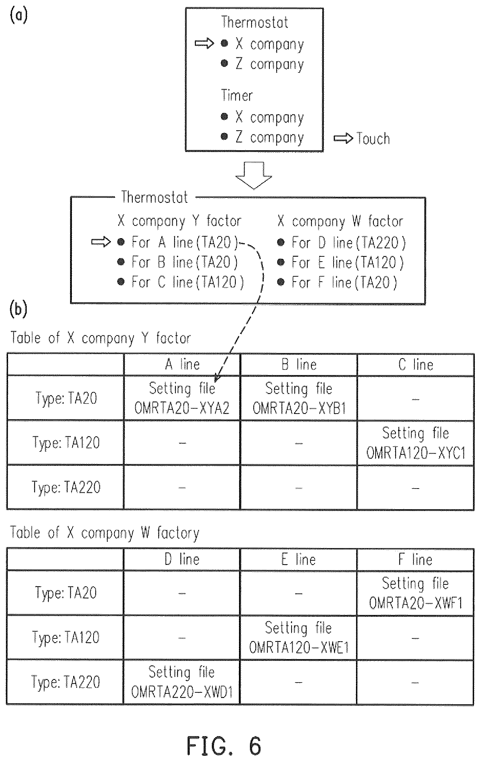

Note that, when setting information is desired to be changed or when there is a setting mistake after a setting operation, as shown in Figs. 5 and 6, a resetting operation is performed.

In other words, in Step S101, the user performs an input on the touch panel 32 of the reader/writer 30 to instruct rewriting of setting information to a thermostat (TA20) for A company Y factory A line (refer to (a) of Fig. 6). Subsequently, in Step S102, the reader/writer 30 wirelessly requests information provision from the RFID module 10. Subsequently, in Step S103, the RFID module 10 wirelessly transmits the type (TA20) to the reader/writer 30. Subsequently, in Step S 104, the reader/writer 30 collates the type (TA20) input by the user with a type wirelessly transmitted from the RFID module 10.

Subsequently, if a collation result in Step S105 (collation OK?) is NO (the types do not match with each other), a collation error is displayed in the touch panel 32 of the reader/writer 30 (Step S106). On the other hand, if a collation result in Step S105 is YES (the types match with each other), the reader/writer 30 selects new setting information (setting file OMRTA20-XYA2) corresponding to a combination of X company Y factory A line and the type from a table illustrated in (b) of Fig. 6, wirelessly transmits the new setting information (setting file OMRTA20-XYA2) to the RFID module 10, and requests rewriting to the memory 6 (Step S107). Thus, in Step S108, the previous setting information in the memory 6 of the RFID module 10 is deleted and the new setting information is written (setting information update).

Subsequently, in Step S109, the RFID module 10 wirelessly notifies the reader/writer 30 of rewrite completion. Subsequently, in Step S110, information indicating that the rewriting of the setting information has been completed normally is displayed in the touch panel 32.

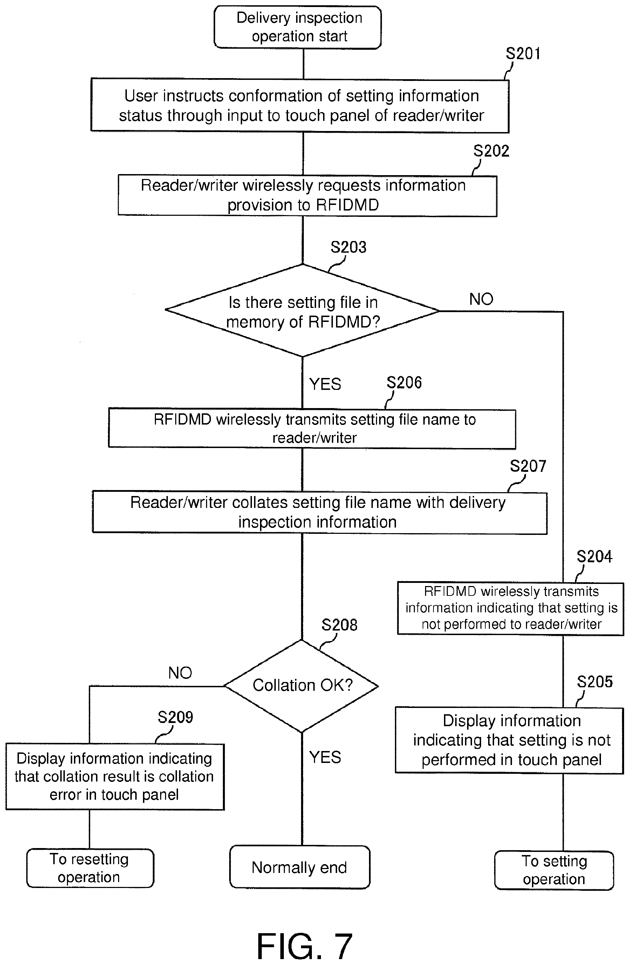

Also, as illustrated in Fig. 7, a setting information status is confirmed in a delivery inspection or the like after a setting operation.

In other words, in Step S201, the user performs an input on the touch panel 32 of the reader/writer 30 to instruct confirmation of the setting information status. Subsequently, in Step S202, the reader/writer 30 wirelessly requests information provision from the RFID module 10.

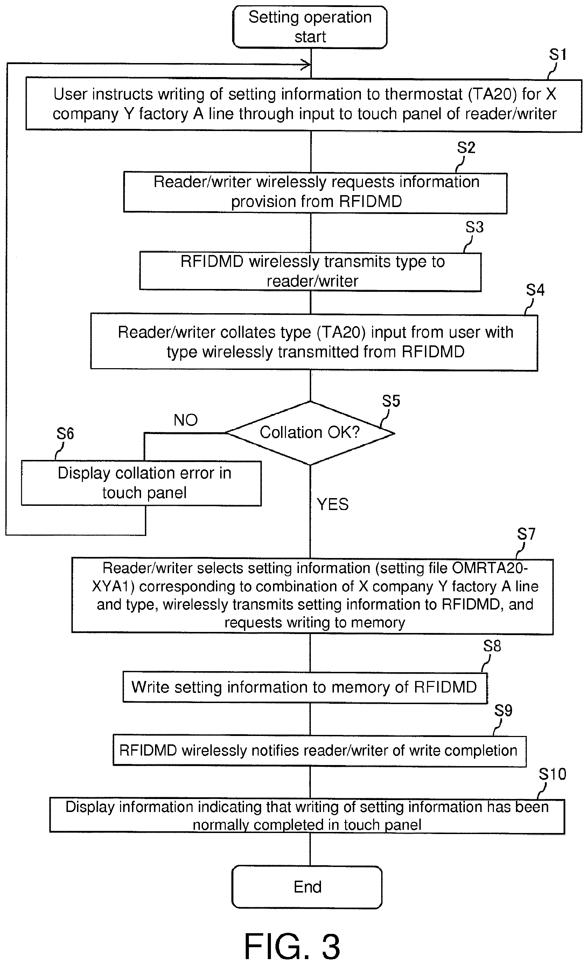

Subsequently, if a confirmation result in Step S203 (is there a setting file in the RFID module 10?) is NO (there is no setting file), the RFID module 10 wirelessly transmits information indicating that the setting is not performed (there is no setting file) to the reader/writer 30 (Step S204). In addition, information indicating that the setting is not performed is displayed in the touch panel 32 (Step S205) and the process transitions to the setting operation (writing of the setting information) of Fig. 3.

On the other hand, if a confirmation result in Step S203 is YES (there is a setting file), the RFID module 10 wirelessly transmits the setting file name (OMRTA20-XYA1) to the reader/writer 30 (Step S206) and the reader/writer 30 collates the setting file name with previously prepared delivery inspection information (database) (Step S207). In Step S207, for example, it is determined whether a type "TA20" and a destination "XYA" match the delivery inspection information or whether "1" in the ending serving as version information matches the delivery inspection information.

Subsequently, if a collation result in Step S208 (collation OK?) is YES, the inspection check operation is completed normally. On the other hand, if a collation result in Step S208 (collation OK?) is NO, information indicating that the collation result is a collation error is displayed in the touch panel 32 (Step S209) and the process transitions to a resetting operation (rewriting of setting information) of Fig. 5.

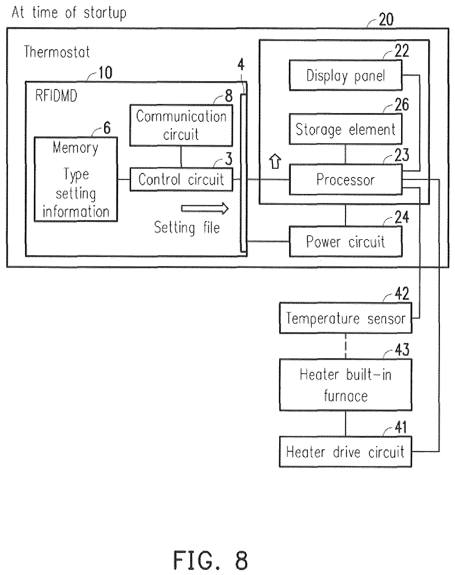

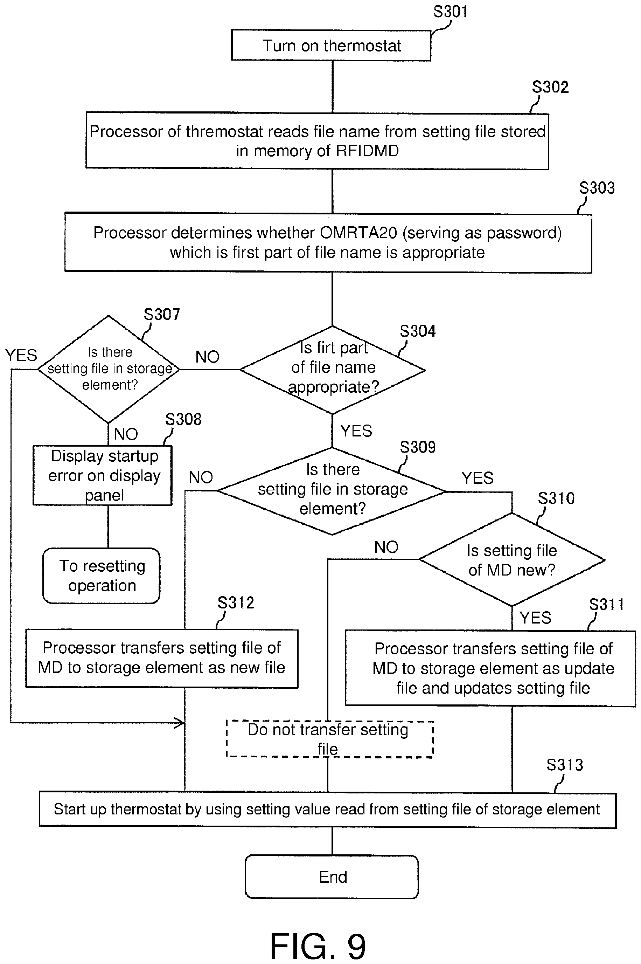

According to embodiment 1 of the invention, the thermostat in which the delivery inspection operation has been completed is started up as illustrated in Figs. 8 and 9. Note that, before the startup, a heater drive circuit 41 configured to drive a heater built-in furnace 43 and a temperature sensor 42 configured to measure a temperature of the heater built-in furnace 43 are connected to the thermostat 20.

As shown in Fig. 8, when a power supply of the thermostat 20 is turned on in Step S301, the processor 23 of the thermostat 20 reads a file name from a setting file stored in the memory 6 of the RFID module 10 (Step S302) and determines whether OMRTA20 (serving as a password) which is the first part of the file name is appropriate (Step S303). To be specific, the first part (identification information) of the file name is collated with predetermined data stored in the storage element 26 which cannot be accessed wirelessly before shipment.

Subsequently, if a determination result of Step S304 (is the first part of the file name appropriate?) is YES (appropriate), the process proceeds to a process of Step S309 (is there a setting file in the storage element 26 of the thermostat 20?). In addition, as shown in Figs. 8 and 9, if a determination result in Step S309 is NO, the processor 23 transmits the setting file of the memory 6 in the RFID module 10 as a new file to the storage element 26 which cannot be accessed wirelessly (Step S312), reads a required setting value from the setting file of the storage element 26, and starts up the thermostat 20 (Step S313).

If a determination result in Step S309 is YES, the processor 23 determines whether the setting file of the RFID module 10 is a new file on the basis of version information (ending of the file name) (Step S310). In addition, as shown in Figs. 8 and 9, if a determination result in Step S310 is YES (the setting file is a new file), the processor 23 transmits the setting file of the RFID module 10 as an update file to the storage element 26, replaces the previous setting file with the setting file (Step S311), reads a required setting value from the setting file of the storage element 26, and starts up the thermostat 20 (Step S313).

If a determination result in Step S310 is NO (the setting file is not a new setting file), the processor 23 reads a required setting value from the setting file (previously transmitted setting file) of the storage element 26 without transmitting the setting file and starts up the thermostat 20 (Step S313).

Note that, if a determination result in Step S304 (is the first part of the file name appropriate?) is NO (inappropriate), the process proceeds to a process of Step S307 (is there a setting file in the storage element 26?). In addition, if a determination result in Step S307 is YES (there is a setting file), a required setting value is read from the setting file (previously transmitted setting file) of the storage element 26 and the thermostat 20 is started up (Step S313). On the other hand, if a determination result in Step S307 is NO (there is no setting file), a startup error is displayed on a display panel 22 (Step S308) and the process proceeds to a resetting operation (refer to Fig. 5).

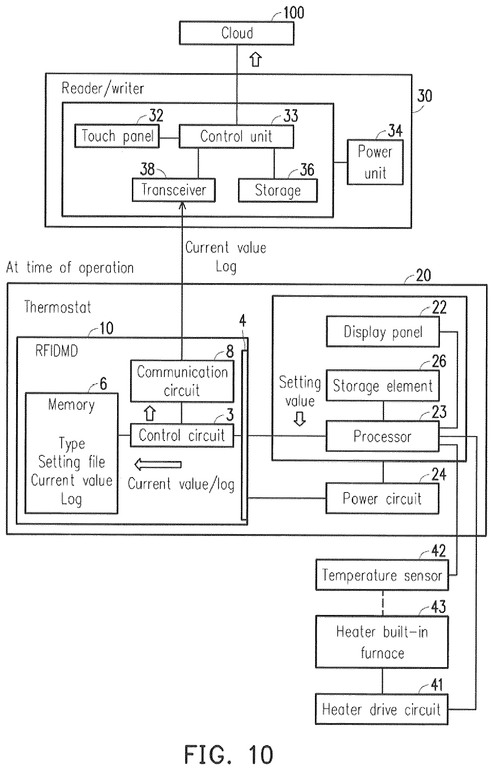

If the thermostat 20 starts up normally, as shown in Fig. 10, the processor 23 controls a heater drive circuit 41 by reading a required setting value from the setting file of the storage element 26 in the thermostat 20 and writes a current value (temperature) and a log to the memory 6 of the RFID module 10 via a control circuit 3.

Moreover, when a read request of a current value or a log (operation information) is received from the reader/writer 30, the control circuit 3 transmits a current value (temperature) or a log of the memory 6 from the communication circuit 8 to the reader/writer 30. The reader/writer 30 can also transmit the current value or the log transmitted from the thermostat 20 to a network (cloud 100 or the like).

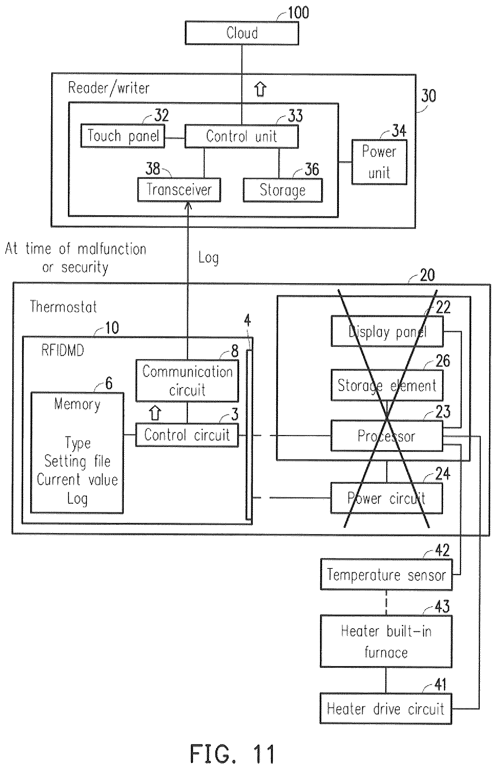

Note that, as shown in Fig. 11, the thermostat 20 can receive a request from the reader/writer 30 and the control circuit 3 can transmit a log in the memory 6 from the communication circuit 8 to the reader/writer 30 even if the power circuit 24 is shut down (at the time of malfunction or security). Moreover, the reader/writer 30 transmits such a log to the cloud 100 so that a cause or the like of a malfunction can be rapidly determined.

According to Example 1, when the reader/writer 30 collates a type to be written of setting information input by the user with a type of the thermostat 20 transmitted from the RFID module 10 and it is determined that the types match with each other, setting information corresponding to the type is wirelessly written to the memory 6 of the RFID module 10.

In this way, since unpacking and wired connection operations are unnecessary because setting information is written wirelessly, as compared with performing wired writing, a setting operation can be performed much more efficiently. Moreover, since a collation failure occurs when there is a mistake in an input by the user at the time of setting (for example, a type to be input is wrong) or a write target is different from the user's intention (for example, the transceiver of the reader/writer faces in an unintended direction), erroneous setting due to wireless writing can be prevented. Thus, an erroneous operation of the thermostat 20 including the RFID module 10 can be prevented.

Also, even if an inappropriate setting is performed for any reason (an incorrect setting file is written, a setting file disappears, or unrelated data is written), such an inappropriate setting can be found using a delivery inspection that does not exert a large burden on the user. Since the user is informed of a setting error at the time of startup even if such a delivery inspection is not performed, a chance of a delivery inspection is missed due to human error, or there is a problem in a setting file after a delivery inspection, an erroneous operation of the thermostat 20 including the RFID module 10 can be prevented.

In the thermostat 20 according to Embodiment 1, the processor 23 transmits the setting file of the memory 6 to the storage element 26 which is not capable of wireless access and performs a startup process at the time of starting up. In addition, since a required setting value is read from the setting file of the storage element 26 during an operation, an erroneous operation of the thermostat 20 can be prevented even if the setting file of the memory 6 is erroneously rewritten while the thermostat 20 is in operation.

### (Example 2)

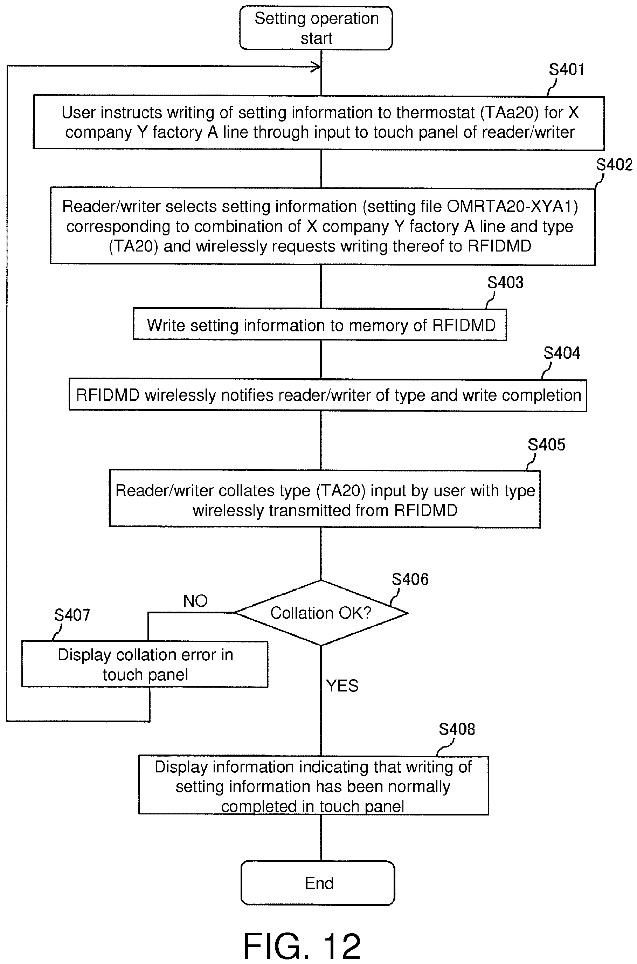

Example 2 is an example useful for understanding the invention. As shown in Fig. 12, in an example, a setting operation can also be performed on a thermostat 20. First, in Step S401, the user instructs writing of setting information to a thermostat (TA 20) for X company Y factory A line through an input to a touch panel 32 of a reader/writer 30 (refer to (a) of Fig. 4).

Subsequently, in Step S402, the reader/writer 30 selects setting information (setting file OMRTA20-XYA1) corresponding to a combination of X company Y factory A line and a type (TA20) from the table as illustrated in (b) of Fig. 4 and wirelessly requests writing from an RFID module 10 (Step S402). Thus, the setting information is written to the memory 6 of the RFID module 10 (Step S403).

Subsequently, in Step S404, the RFID module 10 wirelessly notifies the reader/writer 30 of the type and write completion. The reader/writer 30 receives the type and the write completion and collates a type (TA20) input by the user in S401 with the type wirelessly transmitted from the RFID module 10 in S404 (Step S405).

Subsequently, if a collation result in Step S406 (collation OK?) is NO (the types do not match), a collation error is displayed in the touch panel 32 (Step S407). In addition, if a collation result in S406 (collation OK?) is YES (the types match), information indicating that the writing of the setting information has been completed normally is displayed in the touch panel 32 (Step S408).

In Example 2 in Fig. 12, there is an advantage in that an interaction between the reader/writer 30 and the RFID module 10 is reduced.

### (Example 3)

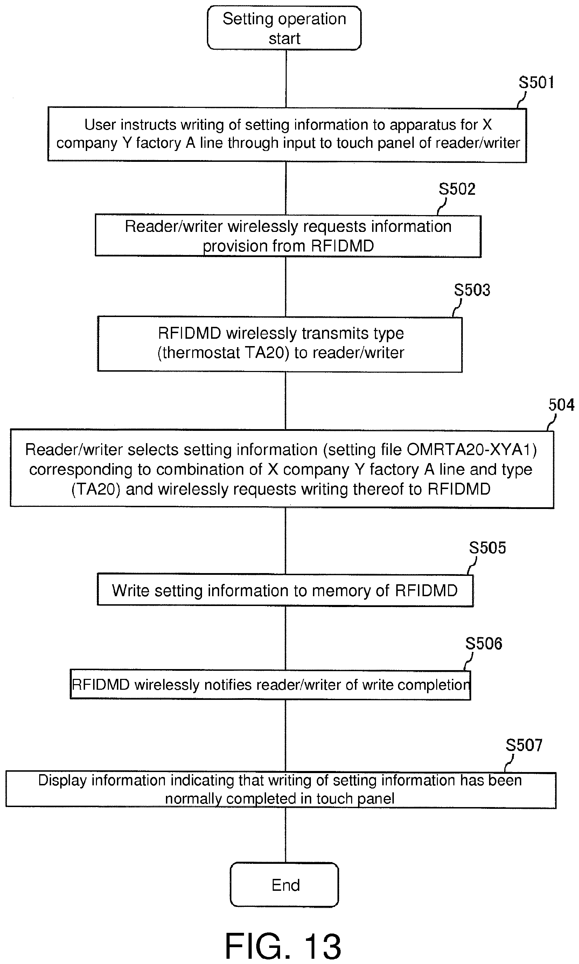

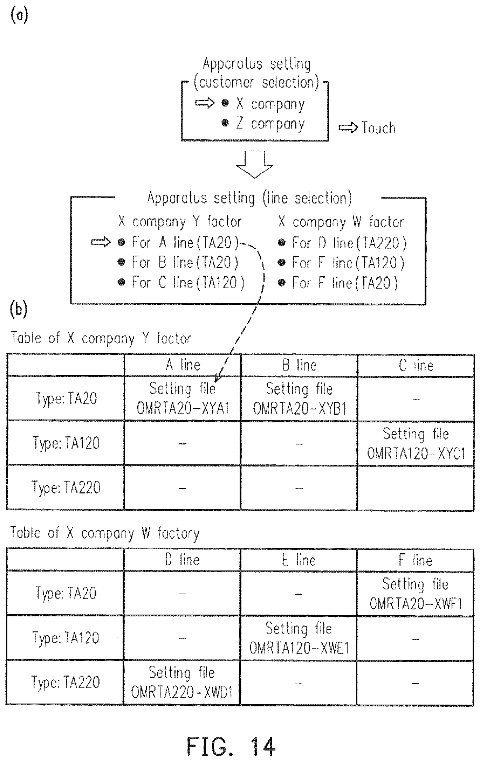

Example 3 is an example useful for understanding the invention. As shown in Figs. 13 and 14, in an example, a setting operation of a thermostat 20 can also be performed. First, in Step S501, the user instructs writing of setting information to an apparatus for X company Y factory A line through an input to a touch panel 32 of a reader/writer 30 (refer to (a) of Fig. 14).

Subsequently, in Step S502, the reader/writer 30 wirelessly requests information provision from the RFID module 10. The RFID module 10 receives the information provision and wirelessly transmits a type (thermostat TA20) to the reader/writer 30 (Step S503).

Subsequently, in Step S504, the reader/writer 30 selects setting information (setting file OMRTA20-XYA1) corresponding to a combination of X company Y factory A line and the type (TA20) from a table illustrated in (b) of Fig. 14 and wirelessly requests writing from the RFID module 10 (Step S504). Thus, the setting information is written to the memory 6 of the RFID module 10 (Step S505).

Subsequently, in Step S506, the RFID module 10 wirelessly notifies the reader/writer 30 of write completion and information indicating that the writing of the setting file has been completed normally is displayed in the touch panel 32 (Step S507).

In Example 3 in Fig. 13, there is an advantage in that a setting operation can be rapidly performed because the user may input only a destination (X company Y factory A line) and need not input a type or form of the apparatus.

### [Example 4]

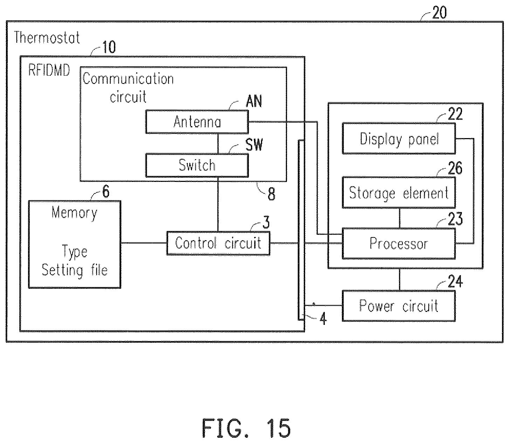

Example 4 is an example useful for understanding the invention. In an example, a thermostat 20 can also be configured as illustrated in Fig. 15. In other words, a communication circuit 8 of an RFID module 10 is configured to include an antenna AN (for example, an antenna separated from a control circuit 3) and a switch SW. Here, the control circuit 3 is connected to the antenna AN via the switch SW and the antenna AN and the switch SW of the communication circuit 8 are connected to a processor 23. The processor 23 controls (turns on or off) the switch SW. Note that the processor 23 can receive a read request from a reader/writer 30 from the antenna AN regardless of a state (on or off) of the switch SW.

The switch SW is a normally-on type in which the switch SW is on when a power supply of the thermostat 20 is off and the switch SW is on at the time of setting (writing of the setting file to the RFID module 10) in the passive state described with reference to Examples 1 to 3.

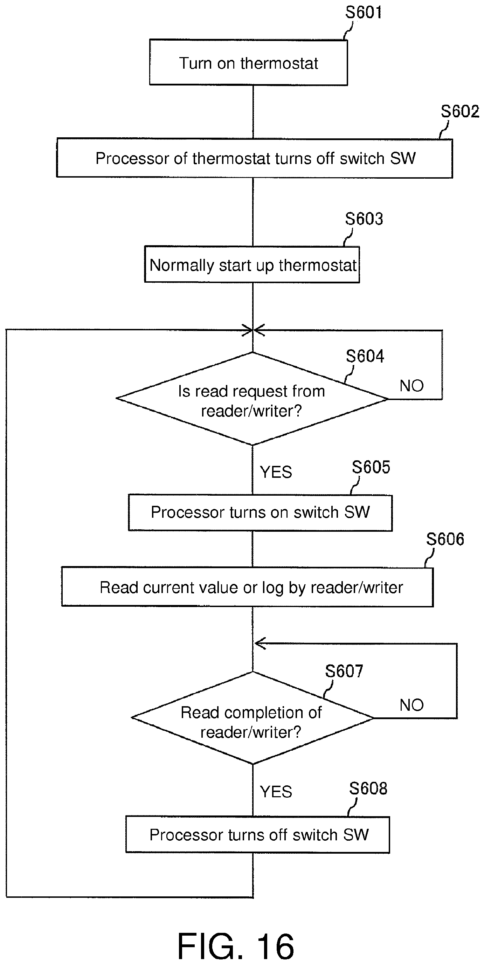

The thermostat 20 in Fig. 15 operates, for example, as illustrated in Figs. 16 to 18. In other words, if the power supply of the thermostat 20 is turned on in Step S601, the processor 23 of the thermostat 20 turns off the switch SW (Step S602). Thus, writing to the memory 6 by the reader/writer 30 is prevented.

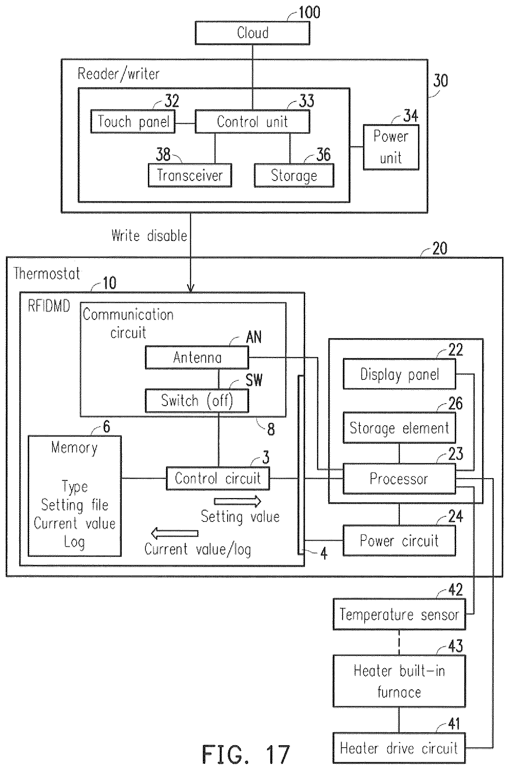

If the thermostat 20 is started up normally in Step S603, the processor 23 controls the heater drive circuit 41 by using various setting values read from a setting file of the memory 6 of the RFID module 10 and writes a current value (temperature) and a log to the memory 6 of the RFID module 10 (refer to Fig. 17).

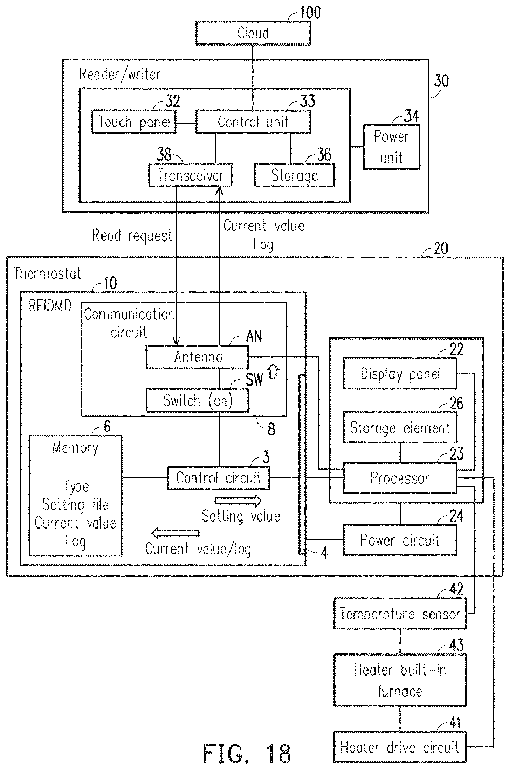

After that, the process proceeds to a process of Step S604 (is there a read request from the reader/writer 30?). In addition, if a result in Step S604 is YES (the processor 23 has detected the read request from the reader/writer 30), the processor 23 turns on the switch SW (Step S605) and the control circuit 3 according to the read request transmits the current value or the log of the memory 6 to the reader/writer 30 (refer to Fig. 18). Thus, the current value or the log is read to the reader/writer 30 (Step S606). Moreover, if the reading of the reader/writer 30 has been completed (YES in Step S607), the processor 23 turns off the switch SW (Step S608) and the process returns to the process of Step S604.

In Example 4, while the thermostat 20 is in operation, the switch SW is off in a period other than a read period of the reader/writer 30 and writing to the memory 6 by the reader/writer 30 can be prevented. Furthermore, in the RFID module 10, writing to the memory 6 cannot be performed in a read period of the memory 6 by using the reader/writer 30. Therefore, while the thermostat 20 is in operation, writing of the RFID module 10 to the memory 6 is effectively enabled and thus an erroneous operation of the thermostat 20 can be avoided due to erroneous rewriting of a setting file of the memory 6 while the thermostat 20 is in operation. Note that, since the switch SW is on when the power supply of the thermostat 20 is off, setting information can be written to the memory 6 described in Embodiments 1 to 3.

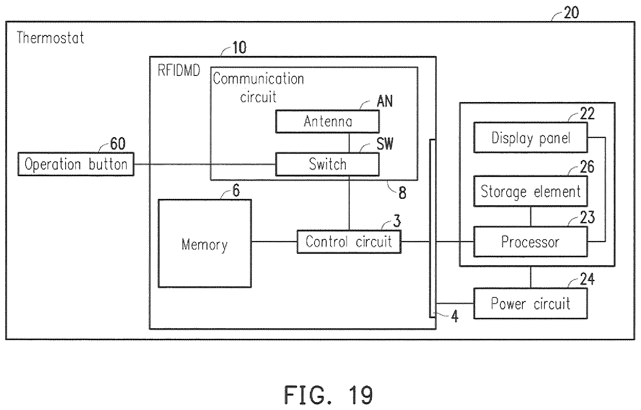

Note that the switch SW of Embodiment 4 is not limited to the configuration of Fig. 15 and may have a configuration in which the user directly turns on/off the switch SW by using an operation button 60 configured in the periphery (case surface of the thermostat 20) of the display panel 22 illustrated in Fig. 19. In this case, situations where writing for another apparatus is erroneously performed for the thermostat 20 can be avoided by turning off the switch SW through the operation button 60 of the thermostat 20 as necessary (for example, when writing is performed for a neighboring apparatus using a reader/writer).

### [Conclusion]

The types (type information) disclosed in the above-described examples are information for specifying types of electronic apparatuses and may be types themselves and types specified from a serial number or the like. Furthermore, specification information may be destination information and information of a sub-divided lower-ordered type. Identification information (OMRTA20 in the above-described example) is information for identification (indicating a setting file for Thermostat TA20 manufactured by OMRON Corporation in the above-described example) and can also serve as a password.

An electronic apparatus according to the present invention is an electronic apparatus which includes a wireless communication module having a wired communication port. The electronic apparatus includes: a storage element which is configured separately from the wireless communication module and cannot be accessed wirelessly; and a processing unit connected to the wireless communication module via the wired communication port and configured to transmit setting information of the electronic apparatus stored in the wireless communication module to the storage element.

According to the above-described configuration, since the setting information stored in the wireless communication module (for example, wirelessly written from the outside) is transmitted to the storage element which cannot be accessed wirelessly, the processing unit can read the setting information from the storage element and operate the electronic apparatus. Thus, an erroneous operation of the electronic apparatus can be prevented even if the setting information of the wireless communication module is erroneously rewritten while the electronic apparatus is in operation.

In the electronic apparatus, the processing unit can also be configured to transmit the setting information to the storage element when the electronic apparatus is started up.

In the electronic apparatus, the processing unit can also be configured to perform a startup process by using the setting information of the storage element.

In the electronic apparatus, the processing unit can also be configured to operate the electronic apparatus by using the setting information of the storage element after the startup.

In the electronic apparatus, the wireless communication module can also be configured to include a memory in which the setting information is wirelessly written from the outside of the electronic apparatus.

The electronic apparatus can also be configured as the setting information including identification information, the processing unit collates the identification information with predetermined data of the storage element, and the setting information is transmitted to the storage element when it is determined that the identification information is appropriate.

The electronic apparatus can also be configured as the setting information including version information, the processing unit accesses the wireless communication module at the time of startup, new version setting information different from previously transmitted setting information is transmitted to the storage element, and the setting information is updated when it is determined that there is the new version setting information in the wireless communication module and identification information included in the new version setting information is appropriate.

In the electronic apparatus, the processing unit can also be configured to perform a startup process by using the previously transmitted setting information when it is determined that the identification information included in the new version setting information is inappropriate.

The electronic apparatus can also be configured to include a display unit configured to display a startup error when it is determined that the identification information is inappropriate and there is no setting information in the storage element.

In the electronic apparatus, the processing unit can also be configured to write operation information of the electronic apparatus to the memory.

In the electronic apparatus, the wireless communication module can also be configured to include a control circuit configured to transmit the operation information to the outside in response to a request from the outside.

In the electronic apparatus, the wireless communication module can also be configured to be an RFID module.

The wireless communication system includes: the electronic apparatus and a reader/writer configured to perform writing of the setting information to the wireless communication module of the electronic apparatus and reading of the operation information of the electronic apparatus from the wireless communication module.

The present invention is not limited to the above-described embodiments and various modifications thereof are possible within the scope of the claims. Embodiments obtained by appropriately combining technical means disclosed in different embodiments are also included in the technical scope of the present invention. New technical features can also be formed by combining technical means disclosed in embodiments.

### [Reference Signs List]

- 2: Wireless communication system
- 3: Control circuit (of RFID module)
- 4: Wired communication port (of RFID module)
- 6: Memory (of RFID module)
- 8: Communication circuit (of RFID module)
- 10: RFID module
- 20: Thermostat
- 22: Display panel (display unit)
- 23: Processor (processing unit)
- 24: Power unit (of thermostat)
- 26: Storage element (of thermostat)
- 30: Reader/writer
- 32: Touch panel
- 33: Control unit
- 34: Power unit (of reader/writer)
- 36: Storage (of reader/writer)
- 38: Transceiver (of reader/writer)
- 41: Heater drive circuit
- 42: Temperature sensor
- 43: Heater built-in furnace
- AN: Antenna
- SW: Switch

## Claims

1. An electronic apparatus (20) which includes a wireless communication module (10) having a wired communication port (4), the electronic apparatus (20) comprising:
a storage element (26) which is provided separately from the wireless communication module (10) and is not able to be accessed wirelessly; and
a processing unit (23) connected to the wireless communication module (10) via the wired communication port (4), the electronic apparatus (20) being **characterized in that**
the processing unit (23) is configured to transmit setting information of the electronic apparatus (20) stored in the wireless communication module (10) to the storage element (26), wherein the wireless communication module (10) includes a memory (6) which is configured such that the setting information is wirelessly written therein from an outside of the electronic apparatus (20);
the setting information includes identification information; and that
the processing unit (23) is configured to collate the identification information with predetermined data of the storage element (26) and to transmit the setting information to the storage element (26) when it is determined that the identification information is appropriate.

2. The electronic apparatus (20) according to claim 1, wherein the processing unit (23) is configured to transmit the setting information to the storage element (26) when the electronic apparatus (20) is started up.

3. The electronic apparatus (20) according to claim 2, wherein the processing unit (23) is configured to perform a startup process by using the setting information of the storage element (26).

4. The electronic apparatus (20) according to claim 3, wherein the processing unit (23) is configured to operate the electronic apparatus (20) by using the setting information of the storage element (26) after the startup.

5. The electronic apparatus (20) according to claim 1, wherein the setting information includes version information, and
the processing unit (23) is configured to access the wireless communication module (10) at the time of startup, and to transmit new version setting information different from previously transmitted setting information to the storage element (26) to update the setting information when there is the new version setting information in the wireless communication module (10) and identification information included in the new version setting information is appropriate.

6. The electronic apparatus (20) according to claim 5, wherein the processing unit (23) is configured to perform a startup process by using the previously transmitted setting information when it is determined that the identification information included in the new version setting information is inappropriate.

7. The electronic apparatus (20) according to claim 1, comprising a display unit (22) configured to display a startup error when it is determined that the identification information is inappropriate and there is no setting information in the storage element.

8. The electronic apparatus (20) according to claim 1, wherein the processing unit (23) is configured to write operation information of the electronic apparatus (20) to the memory (6).

9. The electronic apparatus (20) according to claim 8 wherein the wireless communication module (10) includes a control circuit (3) configured to transmit the operation information to the outside in accordance with a request from the outside.

10. The electronic apparatus (20) according to any one of claims 1 to 9, wherein the wireless communication module (10) is an RFID module (10).

11. A wireless communication system (2), **characterized in**, comprising:
the electronic apparatus (20) according to any one of claims 1 to 10; and
a reader/writer (30) configured to perform writing of setting information of the electronic apparatus (20) to the wireless communication module (10) and reading of operation information of the electronic apparatus (20) from the wireless communication module (10).

## Patentansprüche

1. Elektronische Vorrichtung (20), die ein drahtloses Kommunikationsmodul (10) mit einem verdrahteten Kommunikationsanschluss (4) enthält, wobei die elektronische Vorrichtung (20) umfasst:
ein Speicherelement (26), das getrennt von dem drahtlosen Kommunikationsmodul (10) bereitgestellt ist und auf das nicht drahtlos zugegriffen werden kann; und
eine Verarbeitungseinheit (23), die mit dem drahtlosen Kommunikationsmodul (10) über den verdrahteten Kommunikationsanschluss (4) verbunden ist, wobei die elektronische Vorrichtung (20) **dadurch gekennzeichnet ist, dass**
die Verarbeitungseinheit (23) konfiguriert ist, um Einstellinformationen der elektronischen Vorrichtung (20), die in dem drahtlosen Kommunikationsmodul (10) gespeichert sind, an das Speicherelement (26) zu übertragen, wobei das drahtlose Kommunikationsmodul (10) einen Speicher (6) enthält, der konfiguriert ist, sodass die Einstellinformationen drahtlos von einer Außenseite der elektronischen Vorrichtung (20) darin geschrieben werden;
die Einstellinformationen Identifikationsinformationen enthalten; und dass
die Verarbeitungseinheit (23) konfiguriert ist, dass die Identifikationsinformationen mit vorgegebenen Daten des Speicherelements (26) zugeordnet werden und um die Einstellinformationen an das Speicherelement (26) zu übertragen, wenn festgestellt wird, dass die Identifikationsinformationen geeignet sind.

2. Elektronische Vorrichtung (20) gemäß Anspruch 1, wobei die Verarbeitungseinheit (23) konfiguriert ist, um die Einstellinformationen an das Speicherelement (26) zu übertragen, wenn die elektronische Vorrichtung (20) hochgefahren wird.

3. Elektronische Vorrichtung (20) gemäß Anspruch 2, wobei die Verarbeitungseinheit (23) konfiguriert ist, um einen Hochfahrprozess unter Verwendung der Einstellinformationen des Speicherelements (26) durchzuführen.

4. Elektronische Vorrichtung (20) gemäß Anspruch 3, wobei die Verarbeitungseinheit (23) konfiguriert ist, um die elektronische Vorrichtung (20) unter Verwendung der Einstellinformationen des Speicherelements (26) nach dem Hochfahren zu betreiben.

5. Elektronische Vorrichtung (20) gemäß Anspruch 1, wobei die Einstellinformationen Versionsinformationen enthalten, und
die Verarbeitungseinheit (23) konfiguriert ist, um zum Zeitpunkt des Hochfahrens auf das drahtlose Kommunikationsmodul (10) zuzugreifen und um neue Versionseinstellinformationen zu übertragen, die sich von zuvor übertragenen Einstellinformationen an das Speicherelement (26) unterscheiden, um die Einstellinformationen zu aktualisieren, wenn die neuen Versionseinstellinformationen in dem drahtlosen Kommunikationsmodul (10) vorhanden sind und Identifikationsinformationen, enthalten in den neuen Versionseinstellinformationen, geeignet sind.

6. Elektronische Vorrichtung (20) gemäß Anspruch 5, wobei die Verarbeitungseinheit (23) konfiguriert ist, um einen Hochfahrprozess unter Verwendung der zuvor übertragenen Einstellinformationen durchzuführen, wenn bestimmt ist, dass die Identifikationsinformationen, die in den neuen Versionseinstellinformationen enthalten sind, ungeeignet sind.

7. Elektronische Vorrichtung (20) gemäß Anspruch 1, umfassend eine Anzeigeeinheit (22), die konfiguriert ist, um einen Hochfahrfehler anzuzeigen, wenn bestimmt wird, dass die Identifikationsinformationen ungeeignet sind und keine Einstellinformationen in dem Speicherelement enthalten sind.

8. Elektronische Vorrichtung (20) gemäß Anspruch 1, wobei die Verarbeitungseinheit (23) konfiguriert ist, um Betriebsinformationen der elektronischen Vorrichtung (20) in den Speicher (6) zu schreiben.

9. Elektronische Vorrichtung (20) gemäß Anspruch 8, wobei das drahtlose Kommunikationsmodul (10) eine Steuerschaltung (3) enthält, die konfiguriert ist, um die Betriebsinformationen nach außen zu übertragen, entsprechend einer Anfrage von außen.

10. Elektronische Vorrichtung (20) gemäß einem der Ansprüche 1 bis 9, wobei das drahtlose Kommunikationsmodul (10) ein RFID-Modul (10) ist.

11. Drahtloses Kommunikationssystem (2), **dadurch gekennzeichnet, dass** es umfasst:
die elektronische Vorrichtung (20) gemäß einem der Ansprüche 1 bis 10;und
ein Leser/Schreiber (30), der konfiguriert ist, um Schreiben von Einstellinformationen der elektronischen Vorrichtung (20) an das drahtlose Kommunikationsmodul (10) und Lesen von Betriebsinformationen der elektronischen Vorrichtung (20) von dem drahtlosen Kommunikationsmodul (10) durchzuführen.

## Revendications

1. Appareil électronique (20) comprenant un module de communication sans fil (10) ayant un port de communication câblé (4), l'appareil électronique (20) comprenant :
un élément de stockage (26) pourvu séparément du module de communication sans fil (10) et non accessible sans fil ; et
une unité de traitement (23) connectée au module de communication sans fil (10) via le port de communication câblé (4), l'appareil électronique (20) étant **caractérisé en ce que**
l'unité de traitement (23) est configurée pour transmettre à l'élément de stockage (26) de l'information de configuration de l'appareil électronique (20) stockée dans le module de communication sans fil (10), dans lequel le module de communication sans fil (10) comprend une mémoire (6) qui est configurée de telle sorte que l'information de configuration y est écrite sans fil depuis l'extérieur de l'appareil électronique (20) ;
l'information de configuration comprend de l'information d'identification ; et
l'unité de traitement (23) est configurée pour collationner l'information d'identification avec des données prédéterminées de l'élément de stockage (26), et pour transmettre l'information de configuration à l'élément de stockage (26) quand il est déterminé que l'information d'identification est appropriée.

2. Appareil électronique (20) selon la revendication 1, dans lequel l'unité de traitement (23) est configurée pour transmettre l'information de configuration à l'élément de stockage (26) quand l'appareil électronique (20) est démarré.

3. Appareil électronique (20) selon la revendication 2, dans lequel l'unité de traitement (23) est configurée pour mettre en œuvre un processus de démarrage en utilisant l'information de configuration de l'élément de stockage (26).

4. Appareil électronique (20) selon la revendication 3, dans lequel l'unité de traitement (23) est configurée pour commander l'appareil électronique (20) en utilisant l'information de configuration de l'élément de stockage (26) après le démarrage.

5. Appareil électronique (20) selon la revendication 1, dans lequel l'information de configuration comprend de l'information de version, et
l'unité de traitement (23) est configurée pour accéder au module de communication sans fil (10) au moment du démarrage, et pour transmettre une nouvelle version d'information de configuration différente de l'information de configuration transmise précédemment à l'élément de stockage (26) pour mettre à jour l'information de configuration quand la nouvelle version d'information de configuration est présente dans le module de communication sans fil (10) et l'information d'identification incluse dans la nouvelle version d'information de configuration est appropriée.

6. Appareil électronique (20) selon la revendication 5, dans lequel l'unité de traitement (23) est configurée pour mettre en œuvre un processus de démarrage en utilisant l'information de configuration transmise précédemment quand il est déterminé que l'information d'identification incluse dans la nouvelle version d'information de configuration est inappropriée.

7. Appareil électronique (20) selon la revendication 1, comprenant une unité d'affichage (22) configurée pour afficher une erreur de démarrage quand il est déterminé que l'information d'identification est inappropriée et qu'il n'y a pas d'information de configuration dans l'élément de stockage.

8. Appareil électronique (20) selon la revendication 1, dans lequel l'unité de traitement (23) est configurée pour écrire de l'information de commande de l'appareil électronique (20) dans la mémoire (6).

9. Appareil électronique (20) selon la revendication 8, dans lequel le module de communication sans fil (10) comprend un circuit de commande (3) configuré pour transmettre l'information de commande à l'extérieur conformément à une requête de l'extérieur.

10. Appareil électronique (20) selon l'une quelconque des revendications 1 à 9, dans lequel le module de communication sans fil (10) est un module de radio-identification (10).

11. Système de communication sans fil (2), **caractérisé en ce qu'**il comprend :
l'appareil électronique (20) selon l'une quelconque des revendications 1 à 10 ; et
un dispositif de lecture/écriture (30) configuré pour mettre en œuvre l'écriture d'information de configuration de l'appareil électronique (20) dans le module de communication sans fil (10) et la lecture d'information de commande de l'appareil électronique (20) dans le module de communication sans fil (10).
